# EUROPEAN PATENT APPLICATION

(11) **EP 4 775 816 A2**
(43) Date of publication of application: **15.07.2026**
(21) Application number: 26151139.8
(22) Date of filing: 09.01.2026
(51) Int. Cl.: F02C 6/20, F02C 7/06, F02C 7/12, F02C 7/18, F02K 3/02

(54) **OPEN ROTOR AIRCRAFT PROPULSION SYSTEM WITH ELECTRIC MACHINE SYSTEM COOLING CIRCUIT**

(30) Priority: 09.01.2025 US 202519014929
(71) Applicant: RTX Corporation, Farmington, CT 06032 (US)
(72) Inventor: YAZICI, Murat, Glastonbury, 06033 (US); CLARK, Thomas E., Wells, 04090 (US)
(74) Representative: Dehns

(57) **Abstract**

An apparatus is provided for an aircraft that includes an open rotor propulsion system (20). The open rotor propulsion system (20) includes a turbine engine (32), a first electric machine (100A), a second electric machine (100B), a first controller (102A), a second controller (102B) and a first fluid circuit (134). The first controller (102A) is configured to control operation of the first electric machine (100A). The second controller (102B) is configured to control operation of the second electric machine (100B). The first fluid circuit (134) is configured to circulate a first liquid to cool and/or lubricate the first electric machine (100A), the first controller (102A), the second electric machine (100B) and the second controller (102B).

## Description

### BACKGROUND OF THE DISCLOSURE

### 1. Technical Field

This disclosure relates generally to an aircraft propulsion system and, more particularly, to cooling various components of the aircraft propulsion system.

### 2. Background Information

An aircraft propulsion system includes various components which may utilize heat dissipation during aircraft propulsion system operation. Various heat dissipation systems and methods are known in the art. While these known heat dissipation systems and methods have various benefits, there is still room in the art for improvement.

### SUMMARY OF THE DISCLOSURE

According to an aspect of the present disclosure, an apparatus is provided for an aircraft that includes an open rotor propulsion system. The open rotor propulsion system includes a turbine engine, a first electric machine, a second electric machine, a first controller, a second controller and a first fluid circuit. The first controller is configured to control operation of the first electric machine. The second controller is configured to control operation of the second electric machine. The first fluid circuit is configured to circulate a first liquid to cool and/or lubricate the first electric machine, the first controller, the second electric machine and the second controller.

According to another aspect of the present disclosure, another apparatus is provided for an aircraft. The apparatus includes an open propulsor rotor, a turbine engine, an electric machine system and a first fluid circuit. The turbine engine is configured to drive rotation of the open propulsor rotor about an axis. The turbine engine includes an engine case. The electric machine system includes a first electric machine, a second electric machine, a first controller and a second controller. The first electric machine is arranged with the engine case. The first controller is configured to control operation of the first electric machine. The first controller is arranged remote from the engine case. The second controller is configured to control operation of the second electric machine. The first fluid circuit is configured to circulate a first liquid to service the first electric machine, the first controller, the second electric machine and the second controller.

According to still another aspect of the present disclosure, another apparatus is provided for an aircraft. The apparatus includes an open propulsor rotor, a turbine engine, an electric machine system and a first fluid circuit. The turbine engine is configured to drive rotation of the open propulsor rotor about an axis. The electric machine system includes a first electric machine, a second electric machine, a first controller and a second controller. The first controller is configured to control operation of the first electric machine. The second controller is configured to control operation of the second electric machine. The first fluid circuit is configured to circulate a first liquid to cool and/or lubricate the first electric machine, the first controller, the second electric machine and the second controller. The first fluid circuit includes a circuit path and a plurality of fluid circuit components. The fluid circuit components are fluidly coupled with and arranged inline along the circuit path. At least one of the fluid circuit components is arranged remote from the turbine engine.

The following optional features may be applied to any of the above aspects.

The first controller may be configured upstream of the first electric machine along the first fluid circuit. In addition or alternatively, the second controller may be configured upstream of the second electric machine along the first fluid circuit.

The first controller and the second controller may be arranged in parallel along the first fluid circuit.

The first electric machine and the second electric machine may be arranged in parallel along the first fluid circuit.

The first fluid circuit may include a first circuit reservoir configured to contain a quantity of the first liquid. The first circuit reservoir may be arranged along the first fluid circuit: downstream from the first controller and upstream of the first electric machine; and/or downstream from the second controller and upstream of the second electric machine.

The first fluid circuit may include a first circuit reservoir configured to contain a quantity of the first liquid. The first circuit reservoir may be arranged along the first fluid circuit: upstream of the first controller and downstream from the first electric machine; and/or upstream of the second controller and downstream of the second electric machine.

The first fluid circuit may include a first circuit pump configured to pump the first liquid through the first fluid circuit. The first circuit pump may be arranged along the first fluid circuit: downstream from the first controller and upstream of the first electric machine; and/or downstream from the second controller and upstream of the second electric machine.

The first fluid circuit may include a first circuit pump configured to pump the first liquid through the first fluid circuit. The first circuit pump may be arranged along the first fluid circuit: upstream of the first controller and downstream from the first electric machine; and/or upstream of the second controller and downstream of the second electric machine.

The first fluid circuit may include a heat exchanger. The heat exchanger may be arranged along the first fluid circuit: upstream of the first controller and downstream from the first electric machine; and/or upstream of the second controller and downstream of the second electric machine.

The first fluid circuit may include a heat exchanger. The heat exchanger may be configured as or otherwise include a liquid-to-air heat exchanger.

The first fluid circuit may include a heat exchanger. The heat exchanger may be configured as or otherwise include a liquid-to-liquid heat exchanger.

The first fluid circuit may include a first heat exchanger and a second heat exchanger arranged in parallel along the first fluid circuit.

The first fluid circuit may include a first heat exchanger, a second heat exchanger and a flow regulator configured to selectively direct the first liquid into the first heat exchanger and/or the second heat exchanger.

The first fluid circuit may also include a first controller section leg, a second controller section leg and a flow regulator. The first controller section leg may be in thermal communication with the first controller. The second controller section leg may be in thermal communication with the second controller. The flow regulator may be configured to selectively direct the first liquid into the first controller section leg and/or the second controller section leg.

The first fluid circuit may include a flow regulator configured to selectively direct the first liquid into the first electric machine and/or the second electric machine.

The apparatus may also include an electrical system. The first controller may be configured to electrically couple the electrical system to the first electric machine. The second controller may be configured to electrically couple the electrical system to the first electric machine.

The first electric machine may be configurable as at least one of a first electric motor or a first electric generator. In addition or alternatively, the second electric machine may be configurable as a second electric motor and/or a second electric generator.

The turbine engine may include a first rotating structure and a second rotating structure. The first rotating structure may include a first bladed rotor. The second rotating structure may include a second bladed rotor. The second rotating structure may be operable to rotate independent of the first rotating structure. The first electric machine may be operatively coupled to the first rotating structure. The second electric machine may be operatively coupled to the second rotating structure.

The open rotor propulsion system may also include an open propulsor rotor and an open guide vane structure. The turbine engine may be configured to drive rotation of the open propulsor rotor about an axis. The open guide vane structure may be next to the open propulsor rotor.

The turbine engine may include an engine case. The first electric machine and/or the second electric machine may be arranged with the engine case. The first controller and/or the second controller may be arranged remote from the engine case.

The apparatus may also include a second fluid circuit configured to circulate a second liquid to cool and/or lubricate one or more components of the turbine engine. The second fluid circuit may be fluidly discrete from the first fluid circuit.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system with an open propulsor rotor.
FIG. 2 is a schematic illustration of a portion of the aircraft propulsion system at an electric machine system.
FIG. 3 is a schematic illustration of a portion of the aircraft propulsion system at a working fluid system with multiple fluid circuits.
FIGS. 4 and 5 are schematic illustrations of an electric machine system fluid circuit with various component arrangements.
FIG. 6 is a schematic illustration of a portion of the aircraft propulsion system with electric machine system members arranged with a common structure.
FIGS. 7 and 8 are schematic illustrations of a portion of the aircraft propulsion system with its electric machine system members arranged with different structures.
FIG. 9 is a schematic illustration of a portion of the aircraft propulsion system with at least its electric machine system fluid circuit arranged with a common structure.
FIG. 10 is a schematic illustration of a portion of the aircraft propulsion system with a remotely located heat exchanger.
FIG. 11 is a schematic illustration of a portion of the aircraft propulsion system with a remotely located reservoir.
FIG. 12 is a partial schematic sectional illustration of the aircraft propulsion system at a propulsion section.

### DETAILED DESCRIPTION

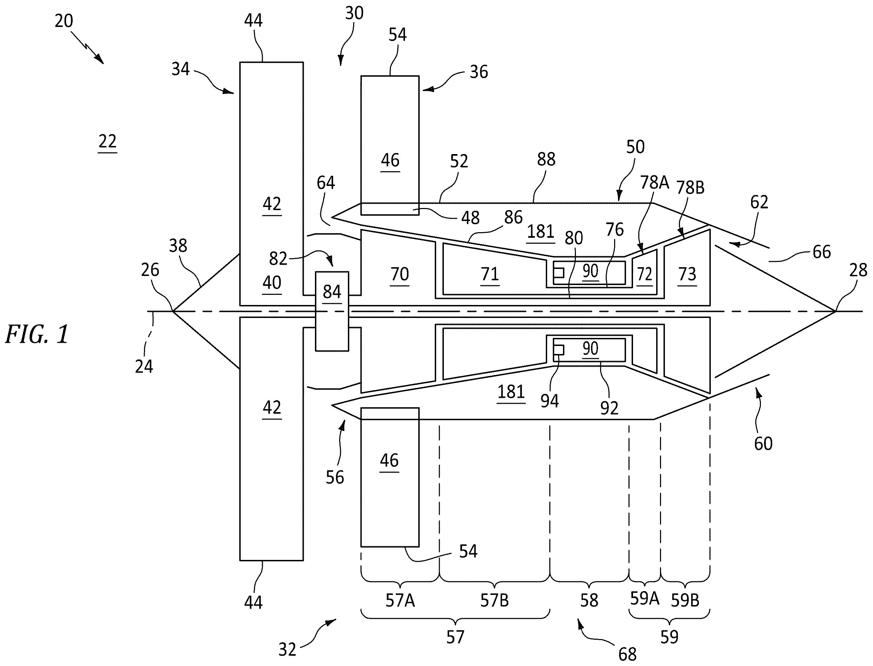

FIG. 1 is a schematic illustration of a propulsion system 20 for an aircraft. The aircraft may be an airplane, a drone (e.g., an unmanned aerial vehicle (UAV)), or any other manned or unmanned aerial vehicle or system. The aircraft propulsion system 20 may be configured as an open rotor propulsion system with a single open rotor and swirl recovery vane (SRV) architecture. Herein, the term "open" may describe a propulsion system section and/or a propulsion system component which is open to an environment 22 (e.g., an ambient environment) external to the aircraft propulsion system 20 and, more generally, the aircraft.

The aircraft propulsion system 20 extends axially along an axis 24 between an upstream, forward end 26 of the aircraft propulsion system 20 and a downstream, aft end 28 of the aircraft propulsion system 20. The propulsion system axis 24 may be a centerline axis of the aircraft propulsion system 20 and/or a centerline axis of one or more members of the aircraft propulsion system 20. The propulsion system axis 24 may also or alternatively be a rotational axis of one or more members of the aircraft propulsion system 20. The aircraft propulsion system 20 of FIG. 1 includes an open rotor propulsion section 30 (e.g., an open rotor propulsion module) and a gas turbine engine 32.

The propulsion section 30 of FIG. 1 includes an open propulsor rotor 34 and an open guide vane structure 36. These propulsion section members 34 and 36 are un-ducted and (optionally) unshrouded components of the aircraft propulsion system 20 and its propulsion section 30. The propulsion section 30 of FIG. 1 also includes a nose cone 38 disposed at (e.g., on, adjacent or proximate) the propulsion system forward end 26. Briefly, this nose cone 38 may be configured as a spinner which is rotatable with the propulsor rotor 34 about the propulsion system axis 24. Alternatively, the nose cone 38 may be configured as a stationary structure of the propulsion section 30.

The propulsor rotor 34 includes a rotor base 40 (e.g., a disk or a hub) and a plurality of open propulsor blades 42 (e.g., airfoils). The propulsor blades 42 are arranged and may be equispaced circumferentially about the rotor base 40 and the propulsion system axis 24 in an array (e.g., a circular array), which array of propulsor blades may be unshrouded or alternatively shrouded by a tubular propulsor rotor shroud dedicated to the propulsor rotor 34 for example. Each of the propulsor blades 42 is connected to (e.g., formed integral with or otherwise attached to) the rotor base 40. Each of the propulsor blades 42 projects spanwise along a span line of the respective propulsor blade 42 (e.g., radially relative to the propulsion system axis 24) out from an exterior surface of the rotor base 40, into the external environment 22, to a distal tip 44 of the respective propulsor blade 42. Each propulsor blade 42 is thereby configured as an un-ducted propulsor blade which is exposed to (e.g., disposed in) the surrounding external environment 22.

The guide vane structure 36 of FIG. 1 includes a plurality of open exit guide vanes 46 (e.g., airfoils) that are arranged and may be equispaced circumferentially about the propulsion system axis 24 in an array (e.g., a circular array), which array of guide vanes may be unshrouded or alternatively shrouded by a tubular guide vane shroud dedicated to the guide vane structure 36 for example. The guide vane structure 36 and its guide vanes 46 are arranged axially next to (e.g., adjacent) the propulsor rotor 34 and its propulsor blades 42. The guide vane structure 36 and its guide vanes 46 of FIG. 1, for example, are arranged downstream of the propulsor rotor 34 and its propulsor blades 42, without (e.g., any) other elements axially therebetween to obstruct, turn and/or otherwise influence the air propelled by the propulsor rotor 34 to the guide vane structure 36 for example. Each of the guide vanes 46 of FIG. 1 is coupled to a support structure 48 of a stationary housing structure 50 for the aircraft propulsion system 20. This support structure 48 may be configured as or otherwise include a support frame, a case and/or another fixed structure of the housing structure 50. Each of the guide vanes 46 projects spanwise along a span line of the respective guide vane 46 (e.g., radially relative to the propulsion system axis 24) out from an exterior surface 52 of the housing structure 50, into the external environment 22, to a distal tip 54 of the respective guide vane 46. Here, the exterior surface 52 radially borders the external environment 22 and forms an exterior aerodynamic flow surface of the aircraft propulsion system 20. Each guide vane 46 is thereby configured as an un-ducted guide vane which is exposed to (e.g., disposed in) the surrounding external environment 22.

The turbine engine 32 includes an inlet section 56, a compressor section 57, a combustor section 58, a turbine section 59 and an exhaust section 60. The compressor section 57 of FIG. 1 includes a low pressure compressor (LPC) section 57A and a high pressure compressor (HPC) section 57B. The turbine section 59 of FIG. 1 includes a high pressure turbine (HPT) section 59A and a low pressure turbine (LPT) section 59B. The turbine engine 32 also includes an (e.g., annular) engine flowpath 62 which extends longitudinally through the aircraft propulsion system 20 of FIG. 1 and its turbine engine 32 from an (e.g., annular) airflow inlet 64 into the engine flowpath 62 to a (e.g., annular) combustion products exhaust 66 from the engine flowpath 62. The flowpath inlet 64 is also an airflow inlet into the aircraft propulsion system 20 of FIG. 1 and its turbine engine 32. The flowpath exhaust 66 is also a combustion products exhaust from the aircraft propulsion system 20 of FIG. 1 and its turbine engine 32. At least (or only) the LPC section 57A, the HPC section 57B, the combustor section 58, the HPT section 59A and the LPT section 59B collectively form a core 68 (e.g., a gas generator) of the turbine engine 32.

Each of the engine sections 57A, 57B, 59A and 59B includes a respective bladed rotor 70-73; e.g., a ducted and/or shrouded engine rotor. Each of these engine rotors 70-73 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 62. Each of the rotor blades is connected to the respective rotor base. Each of the rotor blades projects radially (e.g., spanwise) out from the respective rotor base into the engine flowpath 62 and to a distal tip of the respective rotor blade.

The HPC rotor 71 is coupled to and rotatable with the HPT rotor 72. The HPC rotor 71 of FIG. 1, for example, is connected to the HPT rotor 72 by a high speed shaft 76. At least (or only) the HPC rotor 71, the HPT rotor 72 and the high speed shaft 76 collectively form a high speed rotating structure 78A; e.g., a high speed spool of the engine core 68. This high speed rotating structure 78A of FIG. 1 and its members 71, 72 and 76 are rotatable about the propulsion system axis 24. However, in other embodiments, the high speed rotating structure 78A and its members 71, 72 and 76 may alternatively be rotatable about another rotational axis which is (e.g., laterally and/or angularly) offset from the rotational axis of the propulsor rotor 34.

The LPC rotor 70 is coupled to and rotatable with the LPT rotor 73. The LPC rotor 70 of FIG. 1, for example, is connected to the LPT rotor 73 by a low speed shaft 80. At least (or only) the LPC rotor 70, the LPT rotor 73 and the low speed shaft 80 collectively form a low speed rotating structure 78B; e.g., a low speed spool of the engine core 68. This low speed rotating structure 78B of FIG. 1 and its members 70, 73 and 80 are rotatable about the propulsion system axis 24. However, in other embodiments, the low speed rotating structure 78B and its members 70, 73 and 80 may alternatively be rotatable about another rotational axis which is (e.g., laterally and/or angularly) offset from the rotational axis of the propulsor rotor 34.

The low speed rotating structure 78B is coupled to the propulsor rotor 34 through a drivetrain 82. This drivetrain 82 may be configured as a geared drivetrain, where a geartrain 84 (e.g., a transmission, a speed change device, an epicyclic geartrain, etc.) is disposed between and operatively couples the propulsor rotor 34 to the low speed rotating structure 78B and its LPT rotor 73. With this arrangement, the propulsor rotor 34 may rotate at a different (e.g., slower) rotational speed than the low speed rotating structure 78B and its LPT rotor 73. Here, the propulsor rotor 34 and the low speed rotating structure 78B may rotate in a common (the same) direction about the propulsion system axis 24 or in opposite directions about the propulsion system axis 24 depending, for example, upon the specific configuration of the geartrain 84. Alternatively, the drivetrain 82 may be configured as a direct-drive drivetrain, where the geartrain 84 is omitted. With such an arrangement, the propulsor rotor 34 rotates at a common (the same) rotational speed as the low speed rotating structure 78B and its LPT rotor 73.

The engine sections 56-60 may be arranged sequentially along the propulsion system axis 24 and are housed within and/or formed by the housing structure 50. This housing structure 50 includes an engine case 86 (e.g., a gas generator case) and a nacelle 88. The engine case 86 houses one or more of the engine sections 57A-59B; e.g., the engine core 68. The engine case 86 of FIG. 1, for example, extends axially along (e.g., axially overlaps) and extends circumferentially about (e.g., circumscribes) the engine sections 57A-59B and the respective bladed rotors 70-73. The engine case 86 may also house the geartrain 84. The nacelle 88 houses and provides an aerodynamic cover over the engine case 86. An exterior wall of the nacelle 88 of FIG. 1, for example, is disposed radially outboard of, extends axially along (e.g., axially overlaps) and extends circumferentially about (e.g., circumscribes) the engine core 68 and its engine case 86. This nacelle wall may at least partially or completely form the exterior surface 52. With the foregoing arrangement, the bladed rotors 70-73 are disposed within the housing structure 50. By contrast, the propulsor rotor 34 and the guide vane structure 36 are disposed at least partially (or completely) outside of the housing structure 50.

During operation of the aircraft propulsion system 20 of FIG. 1, ambient air within the external environment 22 is propelled by the rotating propulsor rotor 34 in the downstream, aft direction towards the propulsion system aft end 28. A major portion (e.g., more than 50%) of this air bypasses the turbine engine 32 to provide forward thrust while a minor portion (e.g., less than 50%) of the air flows into the turbine engine 32. For example, an outer stream of the air propelled by the rotating propulsor rotor 34 flows axially across the guide vane structure 36 and outside of the housing structure 50 and its exterior surface 52; e.g., along an exterior of the nacelle 88. The guide vane structure 36 conditions (e.g., straightens out, de-swirls, etc.) the outer stream of air within the external environment 22 to enhance the forward thrust. By contrast, an inner stream of the air propelled by the rotating propulsor rotor 34 may bypass the guide vane structure 36 and enter the turbine engine 32 and its engine flowpath 62 through the flowpath inlet 64. The air entering the engine flowpath 62 through the flowpath inlet 64 may be referred to as "core air".

The core air is compressed by the LPC rotor 70 and the HPC rotor 71 and directed into a combustion chamber 90 (e.g., an annular combustion chamber) of a combustor 92 (e.g., an annular combustor) in the combustor section 58. Fuel is injected into the combustion chamber 90 by one or more fuel injectors 94 and mixed with the compressed core air to provide a fuel-air mixture. This fuel-air mixture is ignited and combustion products thereof flow through and sequentially drive rotation of the HPT rotor 72 and the LPT rotor 73. The rotation of the HPT rotor 72 and the LPT rotor 73 respectively drive rotation of the HPC rotor 71 and the LPC rotor 70 and, thus, compression of the core air. The rotation of the LPT rotor 73 also drives the rotation of the propulsor rotor 34 through the geartrain 84. The turbine engine 32 and its low speed rotating structure 78B thereby power operation of (e.g., drive rotation of) the propulsor rotor 34 during aircraft propulsion system operation.

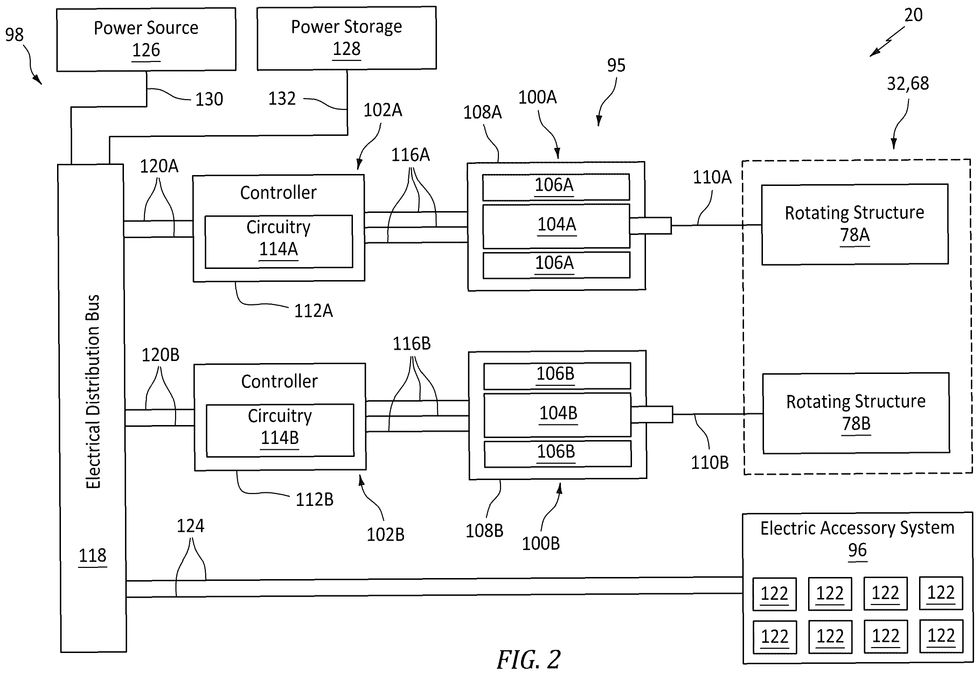

Referring to FIG. 2, the aircraft propulsion system 20 includes an electric machine system 95 electrically coupled to an optional electric accessory system 96 and an electrical system 98 for the aircraft and its aircraft propulsion system 20. The electric machine system 95 of FIG. 2 includes one or more electric machines 100A and 100B (generally referred to as "100") and one or more electric machine (EM) controllers 102A and 102B (generally referred to as "102"). For ease of description, each electric machine 100 of FIG. 2 is described below as being electrically coupled to, controlled by and/or otherwise associated with a single, dedicated one of the EM controllers 102. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with one or more common electric machines.

Each electric machine 100A, 100B of FIG. 2 includes an electric machine rotor 104A, 104B (generally referred to as "104"), an electric machine stator 106A, 106B (generally referred to as "106") and an electric machine housing 108A, 108B (generally referred to as "108"); e.g., a case. The machine rotor 104 is rotatable about a rotational axis of the machine rotor 104, which rotational axis may also be an axial centerline of the electric machine 100. The machine stator 106 of FIG. 2 is radially outboard of and circumscribes the machine rotor 104. With this arrangement, each electric machine 100 is configured as a radial flux electric machine. The electric machines 100 of the present disclosure, however, are not limited to such an exemplary rotor-stator configuration nor to radial flux arrangements. The machine rotor 104, for example, may alternatively be radially outboard of and circumscribe the machine stator 106. In another example, the machine rotor 104 may be axially next to the machine stator 106 configuring the respective electric machine 100 as an axial flux electric machine. Referring again to FIG. 2, the machine rotor 104 and the machine stator 106 are at least partially or completely housed within an interior of the machine housing 108.

Each electric machine 100A, 100B may be operatively coupled to a respective one of the engine rotating structures 78A, 78B (generally referred to as "78"). Each machine rotor 104A, 104B of FIG. 2, for example, is mechanically coupled to and rotatable with the respective engine rotating structure 78A, 78B through a drivetrain 110A, 110B (generally referred to as "110"). This drivetrain 110 may be configured as or otherwise include a shaft, a tower shaft assembly, an accessory gearbox, an angle gearbox, and/or the like. For ease of description, each machine rotor 104 of FIG. 2 is described below as being coupled to and rotatable with a unique one of the engine rotating structures 78 of the turbine engine 32. However, it is contemplated multiple machine rotors may alternatively be coupled to and rotatable with a common engine rotating structure. It is also contemplated a single one of the machine rotors may be coupled to and rotatable with multiple engine rotating structures, directly or through another device such as a differential or a clutch system. In addition, while the electric machines 100 are described above as being coupled to the engine rotating structures 78, it is contemplated the machine rotor 104 of one or more of the electric machines 100 may alternatively be operatively coupled to another rotating device through the drivetrain 110 such as, but not limited to, a pump rotor, an auxiliary compressor rotor, an actuator rotor, or the like.

Each electric machine 100 of FIG. 2 may be configurable as an electric motor and/or an electric generator; e.g., an electric motor-generator. For example, during a motor mode of operation, a respective one of the electric machines 100 may operate as the electric motor to convert electricity received from the aircraft electrical system 98 into mechanical power. The machine stator 106, for example, may generate an electromagnetic field with the machine rotor 104 using a current of electricity received from the aircraft electrical system 98 through the respective EM controller 102. This electromagnetic field may drive rotation of the machine rotor 104. The machine rotor 104, in turn, may provide mechanical power to and drive rotation of the respective engine rotating structure 78 through the respective drivetrain 110. This mechanical power may be provided to boost power or completely power the rotation of the respective engine rotating structure 78. By contrast, during a generator mode of operation, the respective electric machine 100 may operate as the electric generator to convert mechanical power received from the respective engine rotating structure 78 into electricity. Rotation of the machine rotor 104, for example, may be rotationally driven by rotation of the respective engine rotating structure 78 through the respective drivetrain 110. The rotation of the machine rotor 104 may generate an electromagnetic field with the machine stator 106, and the machine stator 106 may convert energy from the electromagnetic field into electricity. The respective electric machine 100 may then provide a current of electricity to the aircraft electrical system 98 through the respective EM controller 102 for storage and/or further use. The electric machines 100 of the present disclosure, however, are not limited to such exemplary operation. For example, one, some or all of the electric machines 100 may alternatively each be configured as a dedicated electric generator; e.g., without the electric motor functionality. In another example, one, some or all of the electric machines 100 may alternatively each be configured as a dedicated electric motor; e.g., without the electric generator functionality.

Each EM controller 102A, 102B includes a controller housing 112A, 112B (generally referred to as "112") and internal controller circuitry 114A, 114B (generally referred to as "114"). The controller housing 112 may be configured as an enclosed case (e.g., a closed or sealed container) for the respective controller circuitry 114. The controller circuitry 114 is disposed within an interior of the controller housing 112; e.g., an internal chamber or other volume(s) within and enclosed by the controller housing 112. The controller circuitry 114 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

Each EM controller 102A, 102B is electrically coupled to a respective one of the electric machines 100A, 100B through one or more electric cables 116A, 116B (generally referred to as "116"); e.g., high voltage electric cables, power feeder cables, etc. More particularly, the controller circuitry 114 of each EM controller 102 is electrically coupled to the respective electric machine 100 and its machine stator 106 through the respective electric cables 116. Similarly, each EM controller 102A, 102B is electrically coupled to an electrical distribution bus 118 of the aircraft electrical system 98 through one or more electric cables 120A, 120B (generally referred to as "120"); e.g., high voltage electric cables, power feeder cables, etc. More particularly, the controller circuitry 114 of each EM controller 102 is electrically coupled to the aircraft electrical system 98 and its electrical distribution bus 118 through the respective electric cables 120.

Each EM controller 102 and its controller circuitry 114 are configured to control operation of a respective one of the electric machines 100. For example, when operating as the electric motor, the respective EM controller 102 and its controller circuitry 114 are configured to regulate a flow of electricity from the aircraft electrical system 98 to the respective electric machine 100. This electricity flow regulation may include: (a) turning-on the flow of electricity from the aircraft electrical system 98 to the respective electric machine 100 (e.g., electrically coupling the respective electric machine 100 to the aircraft electrical system 98); (b) turning-off the flow of electricity from the aircraft electrical system 98 to the respective electric machine 100 (e.g., electrically decoupling the respective electric machine 100 from the aircraft electrical system 98); (c) moderating the flow of electricity from the aircraft electrical system 98 to the respective electric machine 100. Here, the respective EM controller 102 operates as a motor controller. In another example, when operating as the electric generator, the respective EM controller 102 and its controller circuitry 114 are configured to regulate a flow of electricity from the respective electric machine 100 to the aircraft electrical system 98. This electricity flow regulation may include: (a) turning-on the flow of electricity from the respective electric machine 100 to the aircraft electrical system 98 (e.g., electrically coupling the respective electric machine 100 to the aircraft electrical system 98); (b) turning-off the flow of electricity from the respective electric machine 100 to the aircraft electrical system 98 (e.g., electrically decoupling the respective electric machine 100 from the aircraft electrical system 98); (c) moderating the flow of electricity from the respective electric machine 100 to the aircraft electrical system 98. Here, the respective EM controller 102 operates as a generator controller.

The electric accessory system 96 includes one or more electric devices 122. The electric devices 122 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 122 of FIG. 2 may be configured as part of one or more sub-systems for the aircraft propulsion system 20 and its turbine engine 32. Examples of these sub-systems include, but are not limited to: a fuel system for delivering the fuel to the fuel injectors (see FIG. 1); a lubrication system for delivering lubricant (e.g., oil) to one or more lubricated components (e.g., bearing(s), gear system(s), seal system(s), etc.) of the aircraft propulsion system 20 and its turbine engine 32; a cooling system for delivering coolant (e.g., liquid coolant, air, etc.) to one or more fluid cooled components of the aircraft propulsion system 20 and its turbine engine 32; and an actuation system for moving one or more adjustable components (e.g., variable guide vanes, a variable area nozzle, etc.) of the aircraft propulsion system 20 and its turbine engine 32. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices.

Each electric device 122 is electrically coupled to the electrical distribution bus 118 of the aircraft electrical system 98 through one or more electric cables 124 (collectively schematically shown); e.g., high voltage electric cables, low voltage electric cables, power feeder cables, etc. Each electric device 122 may thereby receive a current of electricity from the aircraft electrical system 98 to power operation thereof.

The aircraft electrical system 98 includes the electrical distribution bus 118. This aircraft electrical system 98 may also include a power source 126 and/or a power storage 128. The electrical distribution bus 118 is electrically coupled to each of the electric machines 100 through their respective EM controllers 102. The electrical distribution bus 118 is electrically coupled to each of the electric devices 122. The electrical distribution bus 118 is also electrically coupled to the power source 126 and the power storage 128, schematically shown via 130 and 132 respectively. With this arrangement, the electrical distribution bus 118 provides an intermediate connection between the various electrical aircraft propulsion system members 100A (via 102A), 100B (via 102B), 122, 126 and/or 128. The power source 126 may be an electric generator powered by the turbine engine 32 or an electric generator powered by another aircraft powerplant; e.g., an engine of a companion aircraft propulsion system, an engine of an auxiliary power unit (APU), a fuel cell system, etc. The power storage 128 is configured to receive electricity from the electrical distribution bus 118 for storage. The power storage 128 is also configured to provide the stored electricity to the electrical distribution bus 118. The power storage 128, for example, may be configured as or otherwise include one or more electricity storage devices; e.g., batteries, super capacitors, etc. With the foregoing aircraft electrical system arrangement, the electrical current provided to one, some or all of the electric devices 122 may be received, through the electrical distribution bus 118, from any one, some or all of the electrical aircraft propulsion system members 100A, 100B, 126 and/or 128. It is also contemplated the electrical current provided to one of the electric machines 100 may be received from another one of the electric machines 100 through the aircraft electrical system 98 and its electrical distribution bus 118.

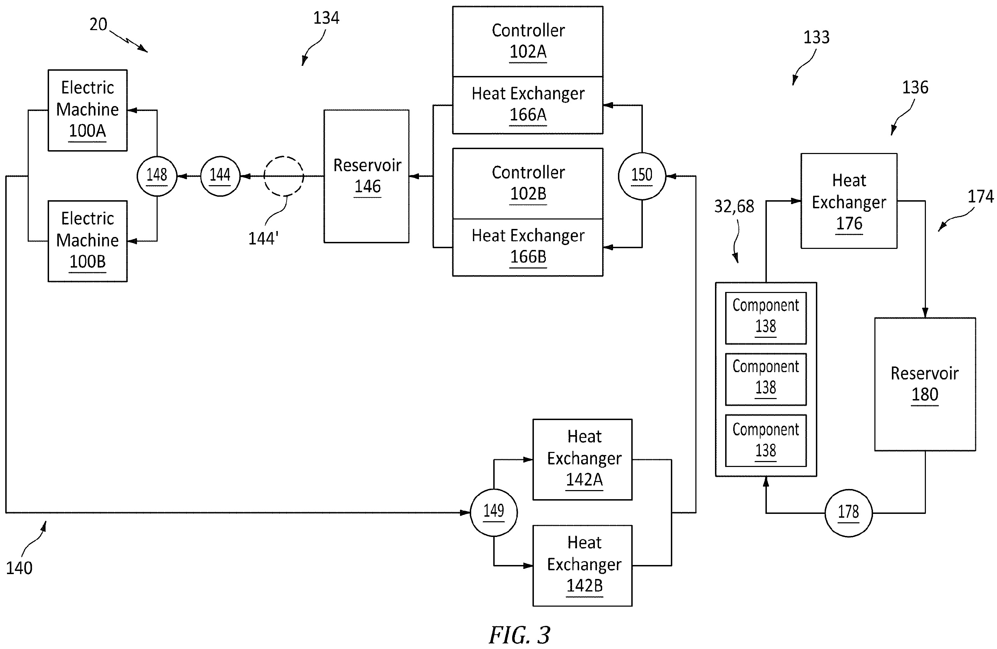

Referring to FIG. 3, the aircraft propulsion system 20 also includes a working fluid system 133 that may be configured as a heat exchange and/or lubrication system for various components of the aircraft propulsion system 20. The working fluid system 133 of FIG. 3, for example, includes one or more discrete fluid circuits 134 and 136; e.g., fluidly decoupled circuits, fluidly independent circuits, etc. Each of these fluid circuits may be configured to service (e.g., cool and/or lubricate) a different set of propulsion system components. For example, the electric machine (EM) system fluid circuit 134 is configured to cool and/or lubricate at least (or only) the first electric machine 100A, the second electric machine 100B, the first EM controller 102A and the second EM controller 102B using an electric machine (EM) system circuit working fluid. The engine fluid circuit 136 is configured to cool and/or lubricate one or more components 138 of the turbine engine 32 and its engine core 68 (see also FIG. 1) using an engine circuit working fluid. Examples of the engine components 138 which may be serviced by the engine fluid circuit 136 may include, but are not limited to, engine bearing(s), the geartrain 84 (see FIG. 1), component(s) of the drivetrain(s) 110 (see FIG. 2), lubricated seal member(s) and engine heat exchanger(s).

By dividing the working fluid system 133 into the discrete fluid circuits 134 and 136, the EM system fluid circuit 134 and the engine fluid circuit 136 may each be individually tuned based on cooling and/or lubrication requirements for one or more of its serviced propulsion system components 100 and 102, 138. For example, the EM system fluid circuit 134 may be tuned for specific heat loads generated by one or more of the electric machine system members 100A, 100B, 102A and/or 102B and/or a working temperature range for one or more of the electric machine system members 100A, 100B, 102A and/or 102B. The engine fluid circuit 136 may be tuned for specific heat loads generated by one or more of the engine components 138 and/or a working temperature range for one or more of the engine components 138. To this end, the working temperature range for the electric machine system members 100A, 100B, 102A and/or 102B may be different (e.g., lower or higher) than the working temperature range for the engine components 138. Moreover, while the EM system circuit working fluid and the engine circuit working fluid may have a common composition (e.g., the same chemical constituent(s)), the EM system circuit working fluid and the engine fluid circuit 136 may alternatively have different compositions (e.g., chemical constituent(s)) to further tune one or more heat exchange and/or lubrication parameters for the respective fluid circuit 134, 136. Similarly, while the fluid circuits 134 and 136 may share one or more common operational parameters (e.g., flow rate, pressure, etc.), the EM system fluid circuit 134 and the engine fluid circuit 136 may alternatively have different operational parameters further tuned for the respective set of propulsion system components.

By providing the single EM system fluid circuit 134 for the electric machine system members 100A, 100B, 102A and 102B, the working fluid system 133 of FIG. 3 may be simplified as compared to an alternative system where different sets of the electric machine system members are configured with discrete fluid circuits. Otherwise duplicative components (e.g., pumps, heat exchangers, flow regulators, valves, flow diverters, etc.) may thereby be omitted from the working fluid system 133 of FIG. 3 to reduce overall propulsion system cost, propulsion system weight and/or propulsion system size. Moreover, an overall thermal mass of the EM system fluid circuit 134 of FIG. 3 may be increased as compared to an alternative system where different sets of the electric machine system members are configured with discrete fluid circuits. Increasing the thermal mass of the EM system fluid circuit 134 of FIG. 3 may in turn reduce transient heating effects from local heat loads. In addition, where one of the electric machines 100A, 100B is passive or dormant (e.g., depowered, disengaged, turned-off, etc.), that passive / dormant electric machine 100A, 100B and its associated (e.g., passive / dormant) EM controller 102A, 102B may operate as a heat sink for heat energy generated by the other electric machine 100B, 100A and its associated EM controller 102B, 102A under certain operating conditions. Servicing the various electric machine system members 100A, 100B, 102A and 102B of FIG. 3 with the single EM system fluid circuit 134 may thereby increase cooling efficiency under certain operating conditions.

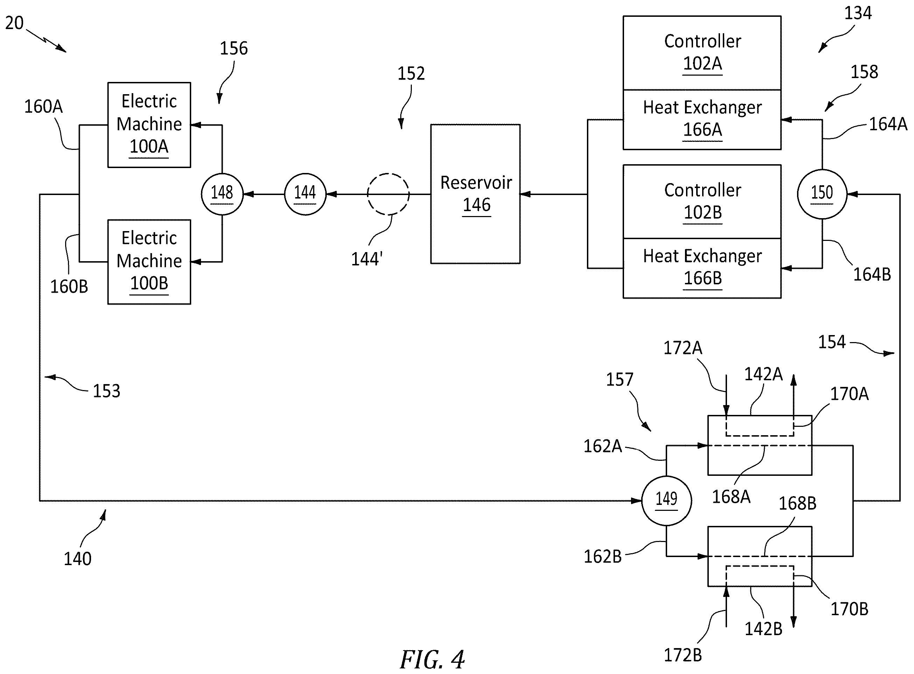

Referring to FIG. 4, the EM system fluid circuit 134 includes an electric machine (EM) system circuit path 140 (e.g., a closed loop circuit path), one or more electric machine (EM) system circuit heat exchangers 142A and 142B (generally referred to as "142"), an electric machine (EM) system circuit pump 144 and an electric machine (EM) system circuit reservoir 146. This EM system fluid circuit 134 may also include one or more electric machine (EM) system circuit flow regulators 148-150; e.g., single inlet-multi outlet flow regulation devices such as multi-way valves (e.g., two-way valves), flow diverters, etc. These EM system circuit members 142, 144, 146 and 148-150 may be structurally and/or operationally independent from any like components in the engine fluid circuit 136 (see FIG. 3), or any other fluid circuit for the aircraft propulsion system 20.

The EM system circuit path 140 may include one or more serial flow sections 152-154 and/or one or more parallel flow sections 156-158. Herein, the term "serial flow section" may describe a section of the EM system circuit path 140 which has a single pathway from an inlet into the respective serial flow section to an outlet from the respective serial flow section. By contrast, the term "parallel flow section" may describe a section of the EM system circuit path 140 which has multiple (e.g., a pair of) parallel pathways between an inlet into the respective parallel flow section to an outlet from the respective parallel flow section. The electric machine (EM) flow section 156 of FIG. 4, for example, includes a set (e.g., a pair) of parallel electric machine (EM) section legs 160A and 160B (generally referred to as "160"). The heat exchanger (HX) flow section 157 of FIG. 4 includes a set (e.g., a pair) of parallel heat exchange (HX) section legs 162A and 162B (generally referred to as "162"). The controller flow section 158 of FIG. 4 includes a set (e.g., a pair) of parallel controller section legs 164A and 164B (generally referred to as "164").

The EM system circuit members 144, 148, 149, 142, 150 and 146 of FIG. 4 are arranged inline along the EM system circuit path 140. The electric machine system members 100 and 102 of FIG. 4 are also arranged inline along the EM system circuit path 140. These electric machine system members 100 and 102 may (or may not) be interspersed with the EM system circuit members 144, 148, 149, 142, 150 and 146 along the EM system fluid circuit 134 and its EM system circuit path 140 to provide staged cooling and/or lubrication for the electric machine system 95. The first flow section 152 of FIG. 4, for example, extends serially through the EM system circuit reservoir 146 and the EM system circuit pump 144 from an inlet into the first flow section 152 to an outlet from the first flow section 152. The first EM system circuit flow regulator 148 is fluidly coupled to and is disposed between (a) the outlet from the first flow section 152 and (b) an inlet into the first EM section leg 160A and an inlet into the second EM section leg 160B. Each EM section leg 160 is fluidly coupled to and extends through a respective one of the electric machines 100A, 100B from the inlet into the respective EM section leg 160 to an inlet into the second flow section 153. Here, the EM section legs 160 and thereby the electric machines 100A and 100B are fluidly coupled in parallel between the first flow section 152 and the second flow section 153. The second EM system circuit flow regulator 149 is fluidly coupled to and is disposed between (a) an outlet from the second flow section 153 and (b) an inlet into the first HX section leg 162A and an inlet into the second HX section leg 162B. Each HX section leg 162 is fluidly coupled to and extends through a respective one of the EM system circuit heat exchangers 142 from the inlet into the respective HX section leg 162 to an inlet into the third flow section 154. Here, the HX section legs 162 and thereby the EM system circuit heat exchangers 142 are fluidly coupled in parallel between the second flow section 153 and the third flow section 154. The third EM system circuit flow regulator 150 is fluidly coupled to and is disposed between (a) an outlet from the third flow section 154 and (b) an inlet into the first controller section leg 164A and an inlet into the second controller section leg 164B. Each controller section leg 164 may be fluidly coupled to and extend through a controller heat exchanger 166A, 166B (generally referred to as "166"; e.g., a cooling plate) from the inlet into the respective controller section leg 164 to the inlet into the first flow section 152. Here, each EM controller 102A, 102B may be mounted to and/or otherwise thermally coupled to a respective one of the controller heat exchangers 166A, 166B thereby arranging that EM controller 102A, 102B in thermal communication with the EM system circuit path 140 and its respective controller section leg 164A, 164B. The controller section legs 164 and thereby the respective members 102A and 166A, 102B and 166B are fluidly coupled, thermally coupled and/or otherwise arranged in parallel between the third flow section 154 and the first flow section 152.

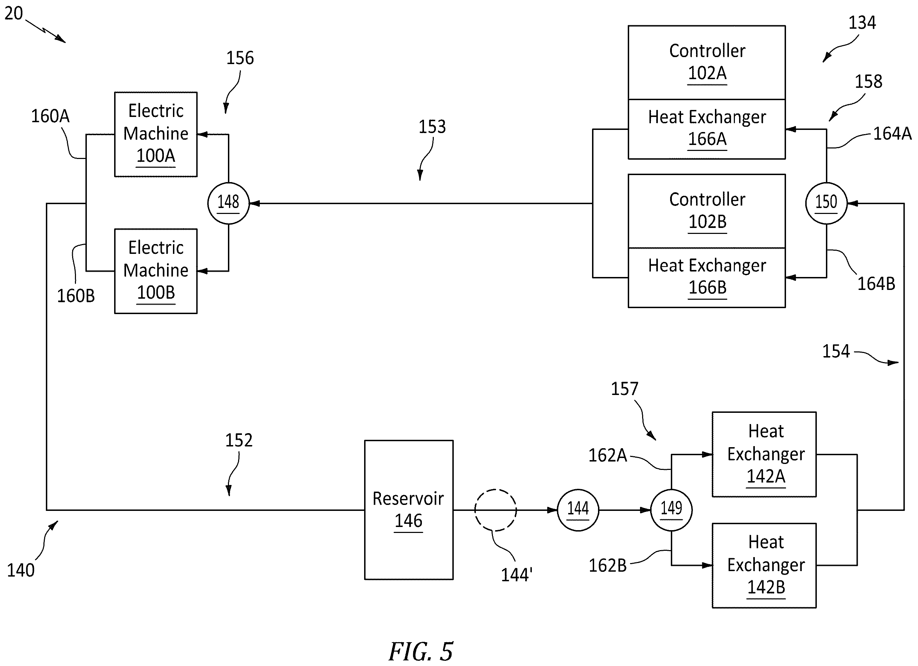

With the arrangement of FIG. 4, the EM system circuit reservoir 146 and the EM system circuit pump 144 are downstream of the EM controllers 102 and their controller heat exchangers 166 along the EM system fluid circuit 134 and its EM system circuit path 140. The EM system circuit reservoir 146 and the EM system circuit pump 144 are upstream of the electric machines 100 along the EM system fluid circuit 134 and its EM system circuit path 140. The EM system circuit heat exchangers 142 are downstream of the electric machines 100 along the EM system fluid circuit 134 and its EM system circuit path 140. The EM system circuit heat exchangers 142 are upstream of the EM controllers 102 and their controller heat exchangers 166 along the EM system fluid circuit 134 and its EM system circuit path 140. The relatively temperature sensitive electronics of the EM controllers 102 of FIG. 4 may thereby be cooled using lower temperature EM system circuit working fluid, whereas the less temperature sensitive components of the electric machines 100 of FIG. 4 may be cooled and/or lubricated using higher temperature EM system circuit working fluid. In addition, the EM system circuit pump 144 may pump relatively warm and, thus, less viscous EM system circuit working fluid for circulation within the EM system fluid circuit 134 and its EM system circuit path 140. The present disclosure, however, is not limited to such an exemplary arrangement. For example, referring to FIG. 5, the relative positions of the first flow section 152 and the second flow section 153 may be reversed such that the EM system circuit reservoir 146 and/or the EM system circuit pump 144 are between the electric machines 100 and the EM system circuit heat exchangers 142 along the EM system fluid circuit 134 and its EM system circuit path 140. Moreover, it is contemplated the EM system fluid circuit 134 of FIG. 4 or 5 may (or may not) include various additional components (not shown) arranged along the EM system circuit path 140 such as filter(s), sensor(s), additional heat exchanger(s), additional component(s), valve(s), pump(s), etc. For example, the EM system fluid circuit 134 of FIG. 4 or 5 may (or may not) also include a second EM system circuit pump 144' for redundancy.

Referring to FIG. 4, each EM system circuit heat exchanger 142A, 142B includes one or more internal intra-circuit heat exchanger (HX) working fluid passages 168A, 168B (generally referred to as "168"; one schematically shown in FIG. 4 for ease of illustration) and one or more internal extra-circuit heat exchanger (HX) working fluid passages 170A, 170B (generally referred to as "170"; one schematically shown in FIG. 4 for ease of illustration). Each of these HX working fluid passages 168, 170 may be partially or completely formed by the respective EM system circuit heat exchanger 142. Each of the HX working fluid passages 168, 170 also extends within and/or through the respective EM system circuit heat exchanger 142. The intra-circuit HX working fluid passages 168 may form a section of or may otherwise be fluidly coupled inline with the respective HX section leg 162. The extra-circuit HX working fluid passages 170 may form a section of or may otherwise be fluidly coupled inline with a path 172A, 172B (generally referred to as "172") of another (e.g., liquid and/or gas) working fluid circuit. The intra-circuit HX working fluid passages 168 are thereby fluidly discrete from the extra-circuit HX working fluid passages 170 within the respective HX system circuit heat exchanger 142. Within each EM system circuit heat exchanger 142, the intra-circuit HX working fluid passages 168 and the extra-circuit HX working fluid passages 170 may be arranged to configure that EM system circuit heat exchanger 142 as a crossflow heat exchanger, a counterflow heat exchanger, a parallel flow heat exchanger, or a hybrid heat exchanger with a combination crossflow, counterflow and/or parallel flow arrangement.

The first EM system circuit heat exchanger 142A may be configured as a liquid-to-air heat exchanger (e.g., a radiator). More particularly, the working fluid flowing through (e.g., circulated within) the HX system fluid circuit 134 and its HX system circuit path 140 may be a liquid working fluid. This liquid working fluid may function as a lubricant and/or a heat exchange fluid for one or more of the propulsion system components (e.g., 100A, 100B, 102A and 102B) being serviced by the EM system fluid circuit 134. The liquid working fluid, for example, may be or otherwise include a liquid lubricant (e.g., oil) and/or a liquid coolant (e.g., refrigerant). By contrast, a second working fluid flowing within the second circuit path 172A through the first EM system circuit heat exchanger 142A may be a gas. This gas may be ambient air or compressed air bled from an engine flowpath (e.g., the engine flowpath 62 of FIG. 1, etc.) or another second working fluid source.

The second EM system circuit heat exchanger 142B may be configured as a liquid-to-liquid heat exchanger. More particularly, a second working fluid flowing within the second circuit path 172B through the second EM system circuit heat exchanger 142B may be a liquid such as fuel, lubricant and/or coolant for another system of the aircraft propulsion system 20, which other system may or may not include the engine fluid circuit 136 of FIG. 3.

The EM system circuit pump 144 of FIG. 4 is configured to direct and/or regulate a flow of the EM system circuit working fluid through the EM system circuit path 140 from an outlet from (e.g., a supply of) the EM system circuit reservoir 146, through the various elements (optionally 144'), 144, 148, 100, 149, 142, 150 and 166, to an inlet into (e.g., a return of) the EM system circuit reservoir 146.

The EM system circuit reservoir 146 is configured to contain a quantity of the EM system circuit working fluid before, during and/or after fluid system operation. The EM system circuit reservoir 146, for example, may be configured as or otherwise include a tank, a cylinder, a pressure vessel, a bladder or any other type of (e.g., liquid) storage container. In some embodiments, the EM system circuit reservoir 146 may be un-vented.

Each EM system circuit flow regulator 148, 149, 150 is configured to selectively direct a flow of the EM system circuit working fluid received from the respective upstream flow section 152, 153, 154 into one or more of the respective downstream section legs 160, 162, 164. For example, during one mode of operation, a respective EM system circuit flow regulator 148, 149, 150 may divert the EM system circuit working fluid received from the respective upstream flow section 152, 153, 154 such that all of that EM system circuit working fluid flows through the respective downstream first section leg 160A, 162A, 164A. During another mode of operation, the respective EM system circuit flow regulator 148, 149, 150 may divert the EM system circuit working fluid received from the respective upstream flow section 152, 153, 154 such that all of that EM system circuit working fluid flows through the respective downstream second section leg 160B, 162B, 164B. During still another mode of operation, the respective EM system circuit flow regulator 148, 149, 150 may selectively divert the EM system circuit working fluid received from the respective upstream flow section 152, 153, 154 such that (a) a first portion of the EM system circuit working fluid flows through the respective downstream first section leg 160A, 162A, 164A and (b) a second portion of the EM system circuit working fluid flows through the respective downstream second section leg 160B, 162B, 164B. Here, the second portion of the EM system circuit working fluid may be equal to or different (e.g., greater or less) than the second portion of EM system circuit working fluid depending upon cooling and/or lubrication requirements for the components 100, 142, 102 along the respective downstream flow section 156, 157, 158.

During operation of the EM system fluid circuit 134 of FIG. 4, the EM system circuit pump 144 directs (e.g., pumps) relatively cool EM system circuit working fluid out of the EM system circuit reservoir 146 into one or more of the downstream electric machines 100. As the EM system circuit working fluid flows through each electric machine 100, heat energy generated by the respective electric machine 100 may be transferred into the EM system circuit working fluid. The heat energy transfer may thereby dissipate the heat energy in (e.g., cool) the respective electric machine 100 while also heating the EM system circuit working fluid. The EM system circuit working fluid may also lubricate one or more internal components within the respective electric machine 100. The now heated working fluid is directed away from the electric machine(s) 100 into one or more of the EM system circuit heat exchangers 142. Within each EM system circuit heat exchanger 142, at least some or all of the heat energy previously transferred into the EM system circuit working fluid from the electric machine(s) 100 and/or the EM controller(s) 102 (as described below) may be transferred out of the EM system circuit working fluid into the respective second working fluid in the respective second circuit path 172 thereby cooling the EM system circuit working fluid. The now cooled EM system circuit working fluid is directed from the EM system circuit heat exchanger(s) 142 into one or more of the controller heat exchangers 166. As the EM system circuit working fluid flows through each controller heat exchanger 166, the heat energy generated by the respective EM controller 102 may be transferred into the EM system circuit working fluid through the respective controller heat exchanger 166. The heat energy transfer may thereby dissipate the heat energy in (e.g., cool) the respective EM controller 102 while also heating the EM system circuit working fluid. This partially heated EM system circuit working fluid is then directed from the controller heat exchanger(s) 166 back into the EM system circuit reservoir 146 of subsequent recirculation.

Referring to FIG. 3, the engine fluid circuit 136 includes an engine circuit path 174, an engine circuit heat exchanger 176, an engine circuit pump 178 and an engine circuit reservoir 180. These engine circuit components 176, 180 and 178 may be arranged inline along the engine circuit path 174. The engine circuit path 174 of FIG. 3, for example, extends serially through the engine circuit components 176, 180 and 178 in a closed loop. The engine circuit path 174 of FIG. 3 is also (a) fluidly coupled to and may extend in series or in parallel through and/or (b) may be otherwise arranged in thermal communication with the engine components 138 serviced by the engine fluid circuit 136. Note, while the engine components 138 are shown as being upstream of the engine circuit heat exchanger 176 along the engine circuit path 174, it is contemplated one or more or all of these engine components 138 may alternatively be downstream of the engine circuit heat exchanger 176 along the engine circuit path 174. In addition or alternatively, while the engine circuit reservoir 180 is shown as being downstream of the engine circuit heat exchanger 176 along the engine circuit path 174, it is contemplated the engine circuit reservoir 180 may alternatively be upstream of the engine circuit heat exchanger 176 along the engine circuit path 174. Moreover, it is contemplated the engine fluid circuit 136 may (or may not) include various additional components (not shown) arranged along the engine circuit path 174 such as filter(s), sensor(s), additional heat exchanger(s), additional component(s), valve(s), pump(s), etc. The present disclosure therefore is not limited to the exemplary engine fluid circuit arrangement shown in FIG. 3.

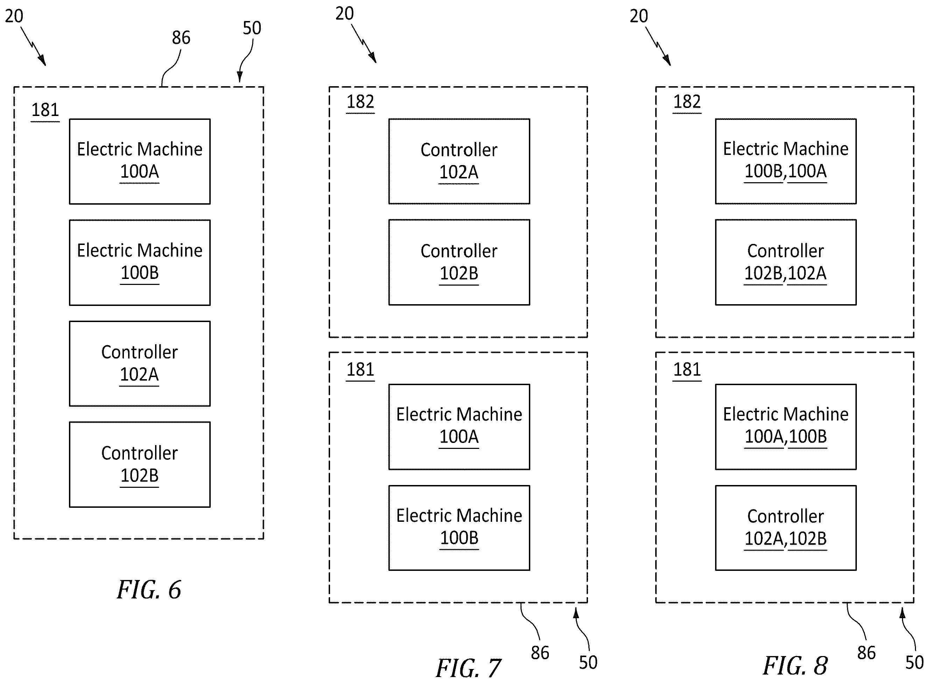

In some embodiments, referring to FIG. 6, the electric machine system members 100A, 100B, 102A and 102B may be mounted and/or otherwise arranged with a common aircraft structure. For example, the electric machine system members 100A, 100B, 102A and 102B of FIG. 6 may be mounted and/or otherwise arranged with the housing structure 50 and its engine case 86; e.g., within a housing compartment 181 (see also FIG. 1). In other embodiments, referring to FIG. 7, one or more of the electric machines 100A and 100B may each be located remote from its associated EM controller 102A and 102B. For example, each electric machine 100 of FIG. 7 may be mounted and/or otherwise arranged with the housing structure 50 and its engine case 86; e.g., within the housing compartment 181. This may thereby locate the electric machines 100 closer to the engine rotating structure 78 (see FIGS. 1 and 2) to which the electric machines 100 may be coupled. By contrast, each EM controller 102 of FIG. 7 may be mounted and/or otherwise arranged with another structure (e.g., 182) of the aircraft outside of the aircraft propulsion system 20. This may thereby locate the EM controllers 102 in a cooler region away from, for example, the relatively hot turbine engine 32 and its engine core 68 (see FIG. 1). In still other embodiments, referring to FIG. 8, one of the electric machines 100A, 100B and its associated EM controller 102A, 102B may be mounted and/or otherwise arranged with the housing structure 50 and its engine case 86; e.g., within the housing compartment 181. The other one of the electric machines 100B, 100A and its associated EM controller 102B, 102A may be mounted and/or otherwise arranged with another structure (e.g., 182) of the aircraft outside of the aircraft propulsion system 20. Examples of the other aircraft structure 182 may include, but are not limited to: a pylon structure mounting the aircraft propulsion system 20 to a wing or a fuselage of the aircraft; the wing of the aircraft; or the fuselage of the aircraft.

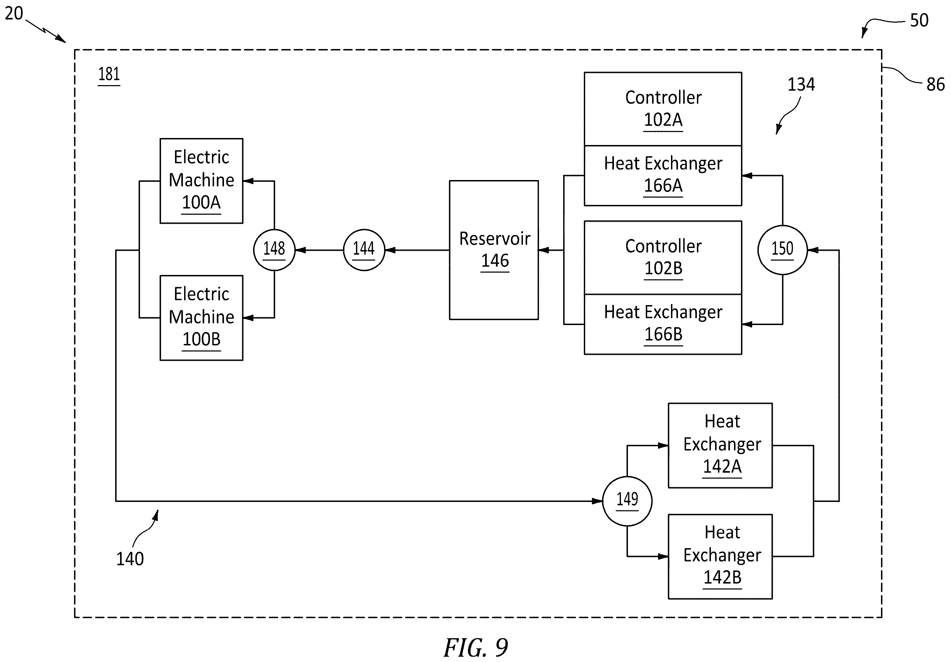

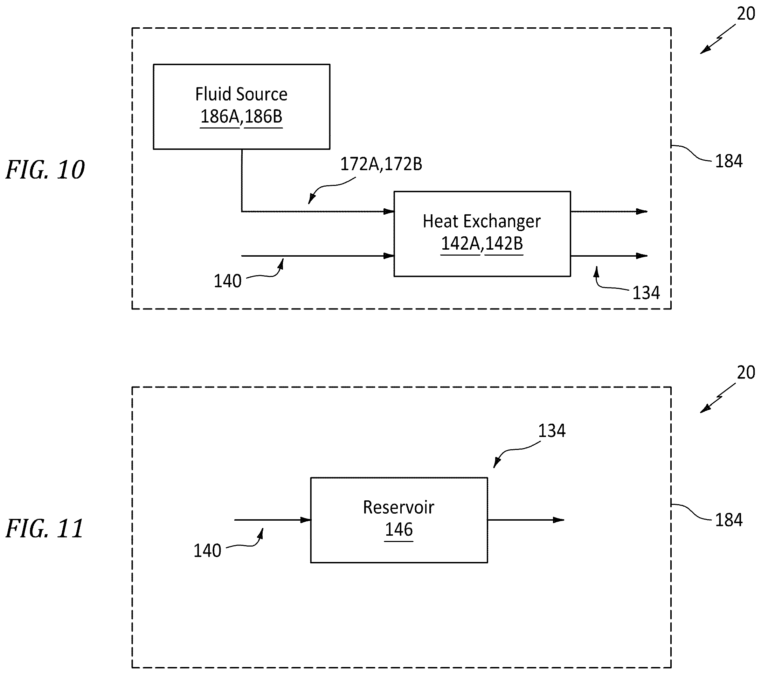

In some embodiments, referring to FIG. 9, one or more or all of the EM system circuit members 142, 144, 146 and 148-150 may be arranged in relatively close proximity to and/or co-located with one or more of all of the electric machine system members 100 and 102 serviced by the EM system fluid circuit 134. For example, each EM system circuit member 142, 144, 146 and 148-150 of FIG. 9 as well as each serviced electric machine system member 100, 102 may be mounted and/or otherwise arranged with the housing structure 50 and its engine case 86; e.g., within the housing compartment 181. With this arrangement, a length of the EM system circuit path 140 may be reduced, fluid losses along the EM system circuit path 140 may be reduced, routing complexity for the EM system circuit path 140 may be simplified, and/or supports and/or mounts for the EM system fluid circuit 134 may be simplified. The present disclosure, however, is not limited to such an exemplary arrangement. One or more of the EM system circuit members 142, 144, 146 and 148-150, for example, may alternatively be arranged remote from the electric machine(s) 100 and/or the EM controller(s) (see FIGS. 4 and 5). For example, referring to FIG. 10, at least one of the EM system circuit heat exchangers 142 may be remotely located with another structure (e.g., 184) of the aircraft outside of the aircraft propulsion system 20 to facilitate packaging and/or to position the respective EM system circuit heat exchanger(s) 142 closer to a source 186A, 186B of the second working fluid. In another example, referring to FIG. 11, the EM system circuit reservoir 146 may be remotely located with another structure (e.g., 184) of the aircraft outside of the aircraft propulsion system 20 to facilitate packaging and/or to position the EM system circuit reservoir 146 in a cooler region away from, for example, the relatively hot turbine engine 32 and its engine core 68 (see FIG. 1). Examples of this other aircraft structure 184 may include, but are not limited to: the pylon structure; the wing of the aircraft; or the fuselage of the aircraft.

Referring to FIG. 1, the engine flowpath 62 extends longitudinally from the flowpath inlet 64, sequentially through the inlet section 56, the LPC section 57A, the HPC section 57B, the combustor section 58, the HPT section 59A, the LPT section 59B and the exhaust section 60, to the flowpath exhaust 66. The engine flowpath 62 of FIG. 1 is configured such that the core air and the combustion products generally flow in the aft, downstream direction towards the propulsion system aft end 28. The core air and the combustion products thereby flow along with the ambient air propelled by the rotating propulsor rotor 34 in a common axial direction - the downstream, aft direction. The turbine engine 32 of the present disclosure, however, is not limited to such an exemplary common flow engine arrangement. For example, the engine flowpath 62 may alternatively be configured such that the core air and the combustion products generally flow in a forward, upstream direction towards the propulsion system forward end 26. The core air and the combustion products may thereby flow in an opposite direction as the ambient air propelled by the rotating propulsor rotor 34. Here, the turbine engine 32 may have a reverse flow engine arrangement.

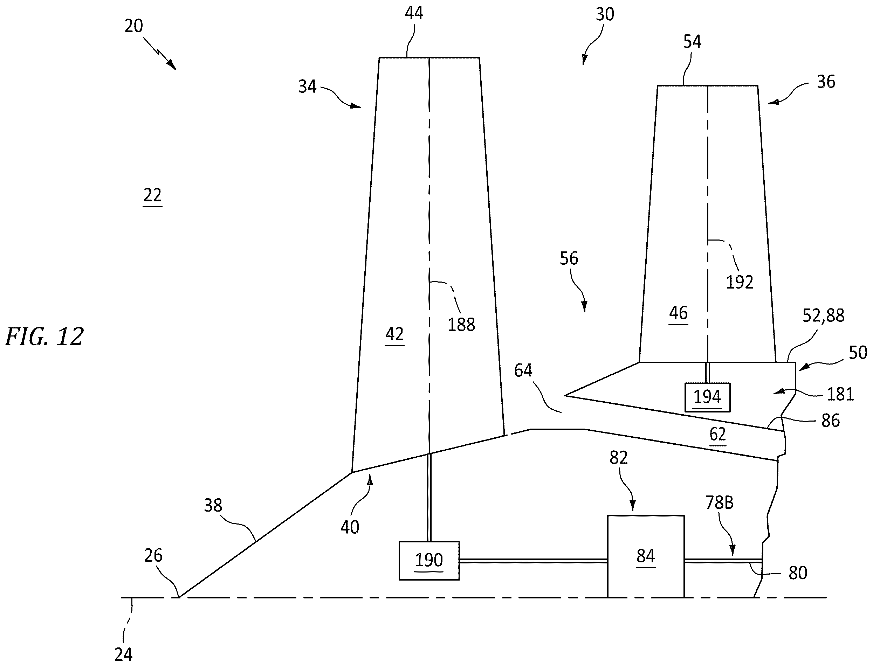

In some embodiments, referring to FIG. 12, each propulsor blade 42 may be configured to pivot about a respective blade pivot axis 188. This blade pivot axis 188 extends radially relative to the propulsion system axis 24. Each propulsor blade 42 of FIG. 12 is operatively coupled with a blade actuation system 190. This blade actuation system 190 is configured to pivot each propulsor blade 42 about its own respective blade pivot axis 188. By pivoting each propulsor blade 42 about its blade pivot axis 188, a pitch of the respective propulsor blade 42 may be changed. Of course, it is contemplated some or all of the propulsor blades 42 may be alternatively moved to change the propulsor blade pitch. Moreover, it is contemplated some or all of the propulsor blades 42 may alternatively be fixed pitch propulsor blades in other embodiments.

In some embodiments, each guide vane 46 may be configured to pivot about a respective vane pivot axis 192. This vane pivot axis 192 extends radially relative to the propulsion system axis 24. Each guide vane 46 of FIG. 12 is operatively coupled with a vane actuation system 194, which vane actuation system 194 may be discrete from or integrated as part of the blade actuation system 190. The vane actuation system 194 is configured to pivot each guide vane 46 about its own respective vane pivot axis 192. By pivoting each guide vane 46 about its vane pivot axis 192, a pitch of the respective guide vane 46 may be changed. Of course, it is contemplated some or all of the guide vanes 46 may be alternatively moved to change the guide vane pitch. Moreover, it is contemplated some or all of the guide vanes 46 may alternatively be fixed pitch guide vanes in other embodiments.

The propulsion section 30 of FIG. 1 is described above with a tractor configuration; e.g., where the propulsor rotor 34 is disposed at or otherwise near the propulsion system forward end 26. It is contemplated, however, the propulsion section 30 may alternatively be disposed at or otherwise near the propulsion system aft end 28 to provide a pusher fan configuration. Moreover, while the turbine engine 32 is described above with a particular two rotating structure arrangement, the present disclosure is not limited thereto. For example, the LPC rotor 70 may be omitted to configure the LPT rotor 73 as a power turbine (PT) rotor for the propulsor rotor 34. In another example, the turbine engine 32 may also include another rotating structure; e.g., an intermediate speed spool for the engine core 68.

The guide vane structure 36 is described above as a fixed (e.g., non-rotatable) guide vane structure. It is contemplated, however, the guide vane structure 36 may alternatively be selectively rotatable about the propulsion system axis 24. With such an arrangement, the aircraft propulsion system 20 may be configured as an open rotor propulsion system with a swirl recovery blade (SRB) open rotor architecture. More particularly, the aircraft propulsion system 20 may operate as: (A) a counter-rotating open rotor (CROR) propulsion system during a dual rotor mode of operation (e.g., when both the propulsor rotor 34 and the structure 36 are counter-rotating about the propulsion system axis 24); and (B) a single open rotor and swirl recovery vane (SRV) propulsion system during a single rotor mode of operation (e.g., when the propulsor rotor 34 is rotating and the structure 36 is rotationally fixed about the propulsion system axis 24). Note, when the guide vane structure 36 is configured to selectively rotate about the propulsion system axis 24, the moving guide vanes 46 operate as propulsor blades.

The aircraft propulsion system 20 of FIG. 1 and its propulsion section 30 are described as including the guide vane structure 36 with an SRV or SRB configuration. The present disclosure, however, is not limited to such an exemplary propulsion system configuration. For example, the aircraft propulsion system 20 may alternatively be configured without an open guide vane structure. The aircraft propulsion system 20 may thereby be configured as a single rotor (SR) open rotor propulsion system. In another example, the aircraft propulsion system 20 may alternatively be configured with a set of the open propulsor rotors (e.g., counter-rotating propulsor rotors) operatively coupled to the turbine engine 32 (see FIG. 1) through the geartrain 84. The aircraft propulsion system 20 may thereby be configured as a counter-rotating open rotor (CROR) propulsion system.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus for an aircraft, comprising:
an open rotor propulsion system (20) including a turbine engine (32), a first electric machine (100A), a second electric machine (100B), a first controller (102A), a second controller (102B) and a first fluid circuit (134);
the first controller (102A) configured to control operation of the first electric machine (100A);
the second controller (102B) configured to control operation of the second electric machine (100B); and
the first fluid circuit (134) configured to circulate a first liquid to cool and/or lubricate the first electric machine (100A), the first controller (102A), the second electric machine (100B) and the second controller (102B).

2. The apparatus of claim 1, wherein:
the first controller (102A) is configured upstream of the first electric machine (100A) along the first fluid circuit (134); and/or
the second controller (102B) is configured upstream of the second electric machine (100B) along the first fluid circuit (134).

3. The apparatus of claim 1 or 2, wherein:
the first controller (102A) and the second controller (102B) are arranged in parallel along the first fluid circuit (134); and/or
the first electric machine (100A) and the second electric machine (100B) are arranged in parallel along the first fluid circuit (134).

4. The apparatus of claim 1, 2 or 3, wherein:
the first fluid circuit (134) comprises a first circuit reservoir (146) configured to contain a quantity of the first liquid, and the first circuit reservoir (146) is arranged along the first fluid circuit (134) at least one of: downstream from the first controller (102A) and upstream of the first electric machine (100A); and/or downstream from the second controller (102B) and upstream of the second electric machine (100B); or
the first fluid circuit (134) comprises a first circuit reservoir (146) configured to contain a quantity of the first liquid, and the first circuit reservoir (146) is arranged along the first fluid circuit (134) at least one of: upstream of the first controller (102A) and downstream from the first electric machine (100A); and/or upstream of the second controller (102B) and downstream of the second electric machine (100B).

5. The apparatus of any preceding claim, wherein:
the first fluid circuit (134) comprises a first circuit pump (144) configured to pump the first liquid through the first fluid circuit (134), and the first circuit pump (144) is arranged along the first fluid circuit (134) at least one of: downstream from the first controller (102A) and upstream of the first electric machine (100A); and/or downstream from the second controller (102B) and upstream of the second electric machine (100B); or
the first fluid circuit (134) comprises a first circuit pump (144) configured to pump the first liquid through the first fluid circuit (134), and the first circuit pump (144) is arranged along the first fluid circuit (134) at least one of: upstream of the first controller (102A) and downstream from the first electric machine (100A); and/or upstream of the second controller (102B) and downstream of the second electric machine (100B).

6. The apparatus of any preceding claim, wherein the first fluid circuit (134) comprises a heat exchanger (142A, 142B), and the heat exchanger (142A, 142B) is arranged along the first fluid circuit (134) at least one of:
upstream of the first controller (102A) and downstream from the first electric machine (100A);
and/or
upstream of the second controller (102B) and downstream of the second electric machine (100B).

7. The apparatus of any preceding claim, wherein:
the first fluid circuit (134) comprises a heat exchanger (142A), and the heat exchanger (142A) comprises a liquid-to-air heat exchanger; and/or
the first fluid circuit (134) comprises a heat exchanger, (142B) and the heat exchanger (142B) comprises a liquid-to-liquid heat exchanger.

8. The apparatus of any preceding claim, wherein the first fluid circuit (134) includes:
a first heat exchanger (142A);
a second heat exchanger (142B); and
a flow regulator (149) configured to selectively direct the first liquid into at least one of the first heat exchanger (142A) or the second heat exchanger (142B).

9. The apparatus of any preceding claim, wherein the first fluid circuit (134) includes:
a first controller section leg (164A) in thermal communication with the first controller (102A);
a second controller section leg (164B) in thermal communication with the second controller (102B); and
a flow regulator (150) configured to selectively direct the first liquid into at least one of the first controller section leg (164A) or the second controller section leg (164B).

10. The apparatus of any preceding claim, wherein the first fluid circuit (134) includes a flow regulator (148) configured to selectively direct the first liquid into at least one of the first electric machine (100A) or the second electric machine (100B).

11. The apparatus of any preceding claim, wherein the turbine engine (32) comprises:
a first rotating structure (78A) comprising a first bladed rotor; and
a second rotating structure (78B) comprises a second bladed rotor, the second rotating structure (78B) operable to rotate independent of the first rotating structure (78A);
the first electric machine (100A) operatively coupled to the first rotating structure (78A); and
the second electric machine (100B) operatively coupled to the second rotating structure (78B).

12. The apparatus of any preceding claim, wherein:
the open rotor propulsion system (20) further includes:
an open propulsor rotor (34), the turbine engine (32) configured to drive rotation of the open propulsor rotor (34) about an axis (24); and
an open guide vane structure (36) next to the open propulsor rotor (34); and/or
the apparatus further comprises a second fluid circuit (136) configured to circulate a second liquid to cool and/or lubricate one or more components (138) of the turbine engine (32), the second fluid circuit (134) fluidly discrete from the first fluid circuit (134).

13. The apparatus of any preceding claim, wherein:
the turbine engine (32) comprises an engine case (86); and
at least one of the first electric machine (100A) or the second electric machine (100B) is arranged with the engine case (86); and
at least one of the first controller (102A) or the second controller (102B) is arranged remote from the engine case (86).

14. An apparatus for an aircraft, comprising:
an open propulsor rotor (34);
a turbine engine (32) configured to drive rotation of the open propulsor rotor (34) about an axis (24), the turbine engine (32) comprising an engine case (86);
an electric machine system (95) including a first electric machine (100A), a second electric machine (100B), a first controller (102A) and a second controller (102B), the first electric machine (100A) arranged with the engine case (86), the first controller (102A) configured to control operation of the first electric machine (100A), the first controller (102A) arranged remote from the engine case (86), and the second controller (102B) configured to control operation of the second electric machine (100B); and
a first fluid circuit (134) configured to circulate a first liquid to service the first electric machine (100A), the first controller (102A), the second electric machine (100B) and the second controller (102B).

15. An apparatus for an aircraft, comprising:
an open propulsor rotor (34);
a turbine engine (32) configured to drive rotation of the open propulsor rotor (34) about an axis (24);
an electric machine system (95) including a first electric machine (100A), a second electric machine (100B), a first controller (102A) and a second controller (102B), the first controller (102A) configured to control operation of the first electric machine (100A), and the second controller (102B) configured to control operation of the second electric machine (100B); and
a first fluid circuit (134) configured to circulate a first liquid to cool and/or lubricate the first electric machine (100A), the first controller (102A), the second electric machine (100B) and the second controller (102B), the first fluid circuit (134) comprising a circuit path (174) and a plurality of fluid circuit components (138), the plurality of fluid circuit components (138) fluidly coupled with and arranged inline along the circuit path (174), and at least one of the plurality of fluid circuit components (138) arranged remote from the turbine engine (32).
